# EUROPEAN PATENT SPECIFICATION

(11) **EP 1 206 644 B1**
(45) Date of publication and mention of the grant of the patent: **18.01.2006**
(21) Application number: 01913114.3
(22) Date of filing: 27.02.2001
(51) Int. Cl.: F15B 9/10, B60T 13/57

(54) **VEHICLE BRAKE BOOSTER WITH TWO-PART AIR VALVE AND METHOD OF ASSEMBLING**
ZWEITEILIGES LUFTVENTIL EINES BREMSENZUSATZVERSTÄRKERS, UND DESSEN MONTAGEVER- FAHREN
SERVOFREIN DE VEHICULE A SOUPAPE A AIR EN DEUX PARTIES, ET PROCEDE D'ASSEMBLAGE

(30) Priority: 01.03.2000 US 186271 P
(43) Date of publication of application: 22.05.2002
(73) Proprietor: Delphi Technologies, Inc., Troy, MI 48007-5052 (US)
(72) Inventor: VERMOESEN, Michel, Jean, Pittsfield, MA 01201 (US); HAERR, Timothy, Allen, Enon, OH 45323 (US); FULKS, Gary C., Dayton, OH 45458 (US)
(74) Representative: Denton, Michael John
(86) International application number: PCT/US2001/006283
(87) International publication number: WO 2001/065122

(56) References cited:
- JP-A- 11 278 248
- US-A- 4 192 220
- US-A- 4 259 893
- US-A- 5 558 001
- US-A- 5 794 506
- US-A- 5 819 633
- US-B1- 6 192 783

## Description

### TECHNICAL FIELD

The present invention and is related to power brake boosters of the differential pressure type. In particular, the power brake booster of the present invention includes a simplified mechanical panic assist air valve assembly and a method of assembling such an air valve.

### BACKGROUND OF THE INVENTION

Power brake boosters of the differential pressure type using engine vacuum are well known in the motor vehicle industry. A brake booster of this type has a diaphragm separating a vacuum chamber open to a source of vacuum, such as created in an engine intake passage, and a working chamber normally provided with vacuum or atmospheric air by a valve apparatus responsive to input brake pedal actuation to provide brake assist force as required through a power piston fixed to the diaphragm and coupled to the booster output.

The valve apparatus in a standard vacuum booster is a double or bipartite valve arrangement. The valve may have a vacuum valve seat on the power piston that is engageable with a floating control valve as well as an air valve that also has a seat engageable with the same side of the floating control valve and is coupled to a brake input rod. In the rest position (no brake apply) the air valve is engaged with the floating control valve, and the vacuum valve is slightly separated therefrom to guarantee vacuum on both sides of the diaphragm and thus no brake boost assist. A brake input to the air valve moves the air valve seat axially past the vacuum valve seat, whereupon the floating control valve moves against the vacuum valve seat to shut off the flow of vacuum into the working chamber and allow the air valve seat to disengage and admit air at atmospheric pressure into the working chamber. The increase in air pressure in the working chamber produces a differential pressure across the diaphragm to move it axially; and the power piston moves with it to provide an assist force to the brake fluid in the master cylinder. Movement of the power piston allows the floating control valve to move toward the air valve seat; and the level of boost assist is thus matched to the driver's input force. The opening of the air valve is calibrated to provide smooth brake apply in normal and typical driving situations.

Occasionally a driver may wish or need to stop the vehicle as quickly as possible. In such a situation, it might be possible to provide quicker brake application by admitting air into the working chamber of the brake booster at a faster rate. But this faster air admittance should not be provided except in such situations, since it would not produce appropriate braking behavior in normal driving. Linear solenoid and rotary motors have been used beneficially to provide dual rate actuation and control of brake boosters. However, the significant complexity of these systems can be a disadvantage in cost and reliability terms. Other brake boosters have been disclosed with the capability to provide a dual reaction ratio as a function of the input force using a dual rate spring-biased double valve. When the input force exceeds a predetermined force, the spring biasing force acting on the double valve is exceeded resulting in a collapse of the valve. Thus, this collapse causes an increased opening through the air valve seat providing a greater rate of airflow therethrough than during normal operation of the valve. The output gain of the booster is accordingly provided at an increased amount. For example, see JP-A-11278248.

However, the attachment feature of the input and output portions of a prior art two-part valve can have some disadvantages. The attachment feature can be a screw attachment. There exists a potential for the screw attachment to unscrew, which affects the dimensional stack height of the valve and the function thereof and thus, the reliability of the valve. The attachment can be a pin. The integrity of the attachment and the alignment thereof can be compromised by an improper joining of the two-part valve as a result of a cross-threaded join of the two parts, or improper alignment before or after pinning or the like.

It would therefore be advantageous to provide a simple means for providing an input and an output portion of a valve for a brake booster using a minimum of robust parts that reduce or eliminate component misalignment and improper stack height in a reliable assembly that is easy to assemble.

### SUMMARY OF THE INVENTION

The present apparatus provides a braking speed of application enhancement by increasing the air valve opening in a vacuum brake booster when a vehicle operator applies braking force quickly and forcefully. This is accomplished with a two-part air valve which is normally expanded axially to a normal length by an internal spring, but which may be shortened to open air valve by a greater amount when the brake pedal input force is sufficient to move the air valve axially against another spring into contact with a shoulder of the power piston. The internal spring has a much higher preload than the other spring so that the booster operates with a fully axially expanded air valve in normal, low force brake activation. Once the air valve axially engages the power piston, however, the increase in air valve opening is immediate and substantial with any further increase in braking force.

One aspect of the present invention provides an air valve assembly for a power piston in a vacuum brake booster including an input element with a hollow axial extension. The hollow axial extension includes a retaining portion. An output element is provided that includes an input extension slidably positioned within the hollow axial extension. The input extension includes an outer groove formed thereon and a ring member is disposed in the outer groove, the ring member positioned adjacent the retaining portion to prevent separation of the input element and outer element.

Another aspect of the present invention provides an assembly wherein the ring member extends outwardly from the outer groove to engage the retaining portion. The ring member can be a circlip.

The retaining portion of the input element can include an inwardly extending notch positioned at an open axial end of the hollow axial extension, an inwardly extending radial retention surface, an inwardly extending catch and an internal groove.

The groove can allow the clip to move axially with respect to the hollow axial extension. The hollow axial extension can include an open axial end. The open axial end can include a plurality of axial slots formed therein, the slots allowing portions of the open axial end defined thereby to be spread apart. The open axial end can include four slots formed in the open axial end. The open axial end can include a beveled surface to guide insertion of the input extension.

Other aspects of the present invention can include a flange formed on the input element. The flange includes a shoulder portion. A spring seat portion is formed on the output element and a spring is disposed between the flange and the spring seat to bias the input element and the output element apart from each other. The spring is provided with a predetermined load resistance above which the air valve assembly collapses by allowing the input element and output element to move axially toward each other. The valve assembly can include a pair of springs, the pair of springs compressing at different predetermined loads.

Another aspect of the present invention provides a method of assembling an air valve for a vacuum brake power booster. The air valve includes an input element and an output element. The method includes retaining a clip on an input extension of the output element. An axial extension of the input element is spread over the clip. The input extension of the output element is inserted into the axial extension of the input element and the input extension is retained to the axial extension. A spring is provided between the input member and the output member before the input extension is inserted into the axial extension.

Another aspect of the invention provides a vacuum brake power booster assembly including an air valve including a means for retaining a clip on an input extension of an output element of the air valve, a means for spreading an axial extension of an input element of the air valve over the clip, a means for inserting the input extension of the output element into the axial extension of the input element and a means for retaining the input extension to the axial extension. The assembly can further include a means for biasing apart the input element and output element. The biasing means compresses at a predetermined apply force to permit collapse of the air valve.

The foregoing and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

### BRIEF DESCRIPTION OF THE DRAWINGS

**FIG. 1** illustrates a section view of one embodiment of the air valve assembly for a brake booster.
**FIG. 2** is an enlargement of **FIG. 1.**
**FIG. 3** is a section view along lines 3-3 **of FIG. 2.**

### DESCRIPTION OF THE PREFERRED EMBODIMENT

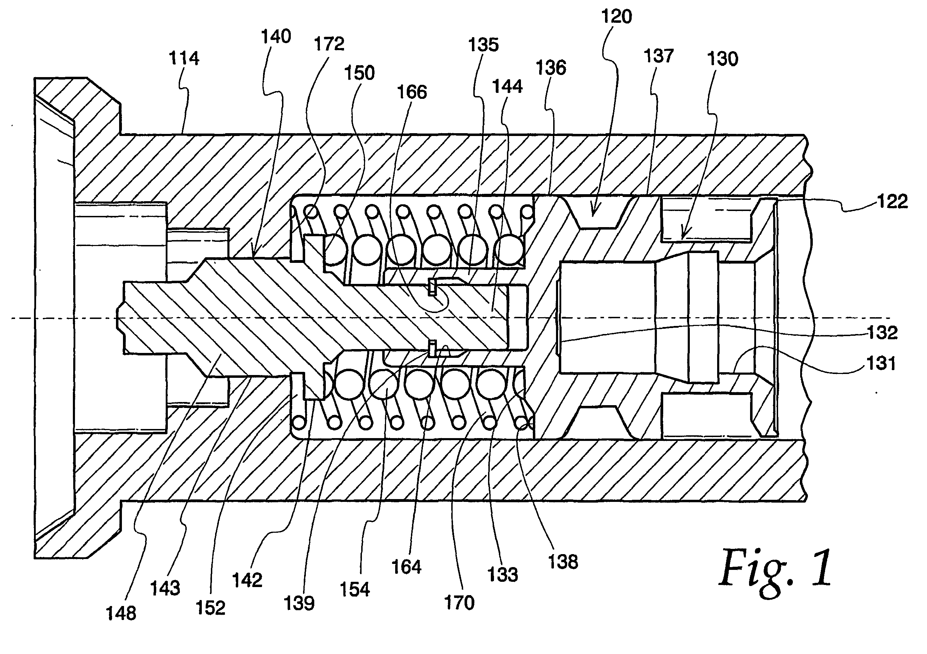

This apparatus shows a "drop- in" replacement air valve assembly for a standard vacuum brake booster to provide a braking speed of application enhancement described above. Referring to **FIG. 1,** air valve assembly **120** comprises two main parts: air valve input element **130** and air valve output element **140.** Each of these parts may be made of a metal, plastic or other suitable material.

Air valve seat input element **130** can be provided with an axially raised rim **122** comprising an air valve seat at the input (right, in **FIG. 1**) end **131** thereof, rim **122** being engageable with the floating control valve, (not shown), in the normal manner. Rim **122** can also define an opening for a deeply concave receptacle **132** in input end **131** adapted to receive an input rod, (not shown), that transfers input brake force from a brake pedal axially to air valve input element **130** in the normal manner. Air valve input element **130** also can define a shoulder **133,** which forms a spring seat facing in the output direction, away from input end **131.** Between air valve seat **122** and shoulder **133** a pair of annular flanges **136,137** can project radially outward from axial end **131** of air valve input member **130** with outer cylindrical surfaces for supporting axial end **131** of air valve input element **130** within a power piston **114.** A spring seat **138** can be also defined on annular flange **136** facing in the output direction, spring seat **138** being located radially outward from shoulder **133.**

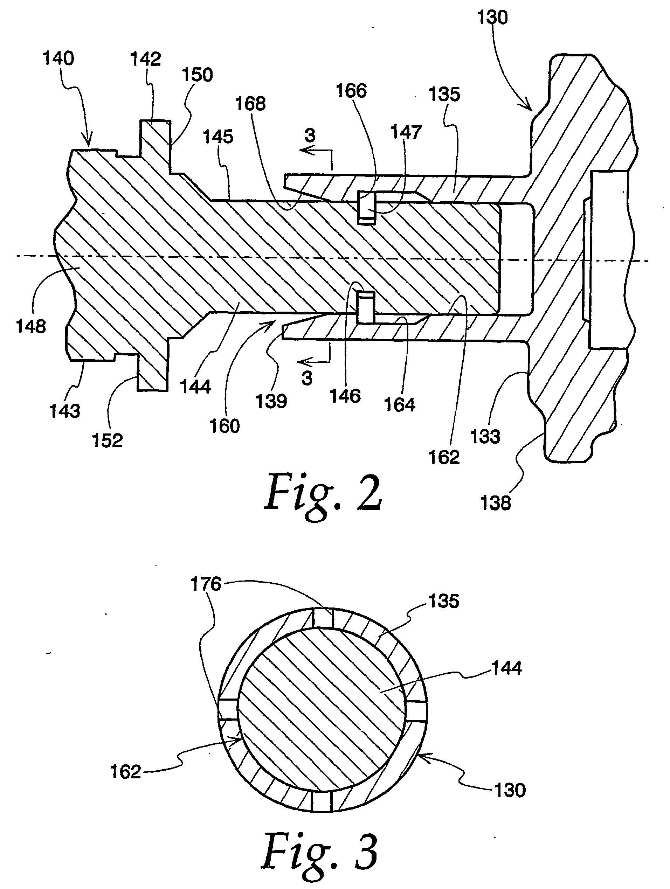

Air valve input element **130** also can include an axial extension **135** extending in the output direction (left in **FIG. 1**) from shoulder **133** and having a reduced outer diameter compared with axial end **131.** Output extension **135** can be essentially tubular in shape and has an open axial end **139** and an essentially cylindrical internal surface **162** provided with an axially extending, circumferential notch or groove **164.** As seen most clearly in **FIG. 2,** which is an enlarged view of a portion of **FIG. 1,** notch **164** defines adjacent end **139,** a retention surface **166,** comprising an annular portion of essentially radial plane; and a portion **168** of internal surface **162** adjacent output end **139** of output extension **135** is tapered as shown. It will be understood that the retention surface **166** can be provided on any feature suitable for retaining a cooperating feature provided on the output member. In other words, the surface **166** can be a portion of a channel, notch, groove, tooth, flange or catch, or the like which includes an effective retaining, substantially radial surface.

As shown in **FIG. 3,** one or more axial slots **176** are provided in output extension **135** from output end **139** inward to separate a substantial portion of output extension **135** from output end **139** inward into a plurality of tangs facilitating limited, resilient outward spreading or expansion of output end **139.**

Air valve output element **140** can include a radially extending flange **142** that provides an axial spring seat **150** on the input (right, in the figure) side thereof and a stop **152** on the output (left) side thereof. On the output end of flange **142,** a plunger portion **148** has an outer cylindrical supporting surface **143.** On the input side of flange **142** is an input extension **144** having an outer cylindrical surface **145** and adapted for insertion within output extension **135** of air valve input element **130.** A circumferential groove **146** contains a retention ring **147,** a portion of which extends radially outward from groove **146** beyond surface **145.** The ring can be a circlip, or the like, that cooperates with surface **166** to retain the output member input extension **148** within axial extension **135.** It should also be noted that extension **148** is slidable with respect to extension **135** even after the ring or clip **147** is engaged by surface **166.** The axial length of groove **164** allows the ring **147** to reciprocate within groove **164,** and thus the output member with respect to the input member. Also, a portion of the length of extension **144** may contact the input element **130** and prevent further collapse of the valve assembly **120.**

To assemble air valve assembly **120,** a compression spring **154** is inserted over axial extension **135** of air valve input member **130** abutting shoulder **133.** Retention ring **147** is seated in groove **146.** Input extension **144** is axially inserted into axial opening **160** of air valve input element **130.** As air valve element **130** and **140** are moved toward each other during insertion, spring **154** is compressed between shoulder **133** of air valve input element **130** and spring seat **150** on flange **142** of air valve output element **140** to exert a separating bias between the elements **130, 140.** In addition, the tangs of output end **139** (defined by slots **176)** are pushed radially and resiliently outwardly by retention ring **147** until the latter passes retention surface **166** of notch **164.** At this point, the tangs of end **139** are no longer pushed outward and resiliently return inward. The insertion force is withdrawn, and the separate bias exerted by spring **154** between air valve input element **130** and air valve output element **140** causes axial expansion of air valve assembly **120** to the maximum axial length permitted by retention ring **147** locked in groove **146** and engaging retention surface **166** of notch **164.** Air valve assembly **120** can be then installed in the power piston **114** with an air valve spring **170** compressed between spring seat **138** on air valve input element of air valve assembly **120** and the cooperating spring seat on a shoulder **172** in the power piston to bias air valve assembly **120** in the input direction.

In braking operation, if normal braking forces are applied to air valve assembly **120** by the vehicle operator, the relatively greater strength of compression spring **154** keeps air valve elements **130** and **140** fully separated in a constant axial relationship; and normal brake booster operation results. But if a large, sudden braking force is applied to air valve assembly **120** sufficient to engage stop **152** on the output face of flange **142** with shoulder **172** of power piston **114,** compression spring **154** is temporarily compressed to allow air valve input element **130** to move axially toward air valve output element **140.** It will be understood that the spring **154** will compress at a predetermined force that coincides to a panic apply force. Since air valve seat **122** is carried on air valve input element **130,** it provides a greater than normal opening relative to the floating control valve, which is limited in leftward movement by power piston **114,** for airflow into the booster working chamber. This results in faster booster response and quicker increase in braking force at the wheels.

While the embodiment of the invention disclosed herein is presently considered to be preferred, various changes and modifications can be made without departing from the scope of the invention as indicated in the appended claims.

## Claims

1. An air valve assembly (120) for a power piston (114) in a vacuum brake booster comprising:
an input element (130) including a hollow axial extension (135), the hollow axial extension including a retaining portion (166);
an output element (140) including an input extension (144) slidably positioned within the hollow axial extension (135), the input extension including an outer groove (146) formed therein;
a spring (170) disposed between the input element (130) and the power piston (114) and engaged with the power piston; and
a ring member (147) disposed in the outer groove (146), the ring member positioned adjacent the retaining portion (166) to prevent separation of the input element (130) and output element (140).

2. The assembly of claim 1 wherein the ring member (147) extends outwardly from the outer groove (146) to engage the retaining portion (166).

3. The assembly of claim 1 wherein the ring member (147) is a circlip.

4. The assembly of claim 2 wherein the retaining portion (166) of the input element (130) includes an inwardly extending notch positioned adjacent an open axial end (139) of the hollow axial extension (135).

5. The assembly of claim 2 wherein the retaining portion (166) of the input element (130) includes an inwardly extending radial retention surface.

6. The assembly of claim 2 wherein the retaining portion (166) of the input element (130) includes an inwardly extending catch.

7. The assembly of claim 2 wherein the retaining portion (166) of the input element (130) includes an internal groove (164).

8. The assembly of claim 7 wherein the groove (164) allows the ring member (147) to move axially with respect to the hollow axial extension (135).

9. The assembly of claim 1 wherein the hollow axial extension (135) includes an open axial end (139).

10. The assembly of claim 9 wherein the open axial end (139) includes a plurality of axial slots (176) formed therein, the slots allowing portions of the open axial end (139) defined thereby to be spread apart.

11. The assembly of claim 10 including four slots (176) formed in the open axial end (139).

12. The assembly of claim 10 wherein the open axial end (139) includes a beveled surface (168) to guide insertion of the input extension (144).

13. The assembly of claim 1 further comprising:
a flange(136) formed on the input element (130), the flange including a shoulder portion (137);
a spring seat portion (150) formed on the output element (140); and
a second spring (154) disposed between the flange (136) and the spring seat (150) to bias the input element (130) and the output element (140) apart from each other.

14. The assembly of claim 13 wherein the second spring (154) is provided with a predetermined load resistance above which the air valve assembly (120) collapses by allowing the input element (130) and output element (140) to move axially toward each other.

15. A method of assembling an air valve (120) for a vacuum brake power booster, the air valve including an input element (130) and an output element (140) comprising:
retaining a clip (147) on an input extension (144) of the output element (140);
spreading an axial extension (135) of the input element (130) over the clip(147);
inserting the input extension (144) of the output element (140) into the axial extension (135) of the input element (130); and
retaining the input extension (144) to the axial extension (135).

16. The method of claim 15 further comprising:
providing a spring (154) between the input element (130) and the output element (140) before the input extension (144) is inserted into the axial extension (135).

## Patentansprüche

1. Luftventilanordnung (120) für einen Arbeitskolben (114) in einem Unterdruck-Bremskraftverstärker, die umfasst:
ein Eingangselement (130) mit einer hohlen axialen Erweiterung (135), wobei die hohle axiale Erweiterung einen Rückhalteabschnitt (166) umfasst;
ein Ausgangselement (140) mit einer Eingangserweiterung (144), die verschiebbar innerhalb der hohlen axialen Erweiterung (135) angeordnet ist, wobei die Eingangserweiterung eine darin gebildete Außennut (146) umfasst;
eine Feder (170), die zwischen dem Eingangselement (130) und dem Arbeitskolben (114) angeordnet ist und mit dem Arbeitskolben in Eingriff steht; und
ein Ringelement (147), das in der Außennut (146) angeordnet ist, wobei das Ringelement benachbart des Rückhalteabschnitts (166) angeordnet ist, um eine Trennung des Eingangselements (130) und des Ausgangselements (140) zu verhindern.

2. Anordnung nach Anspruch 1, wobei das Ringelement (147) sich von der Außennut (146) auswärts erstreckt, so dass es mit dem Rückhalteabschnitt (166) in Eingriff steht.

3. Anordnung nach Anspruch 1, wobei das Ringelement (147) ein Sicherungsring ist.

4. Anordnung nach Anspruch 2, wobei der Rückhalteabschnitt (166) des Eingangselements (130) eine sich einwärts erstreckende Kerbe umfasst, die benachbart eines offenen axialen Endes (139) der hohlen axialen Erweiterung (135) angeordnet ist.

5. Anordnung nach Anspruch 2, wobei der Rückhalteabschnitt (166) des Eingangselements (130) eine sich einwärts erstreckende radiale Rückhaltefläche umfasst.

6. Anordnung nach Anspruch 2, wobei der Rückhalteabschnitt (166) des Eingangselements (130) eine sich einwärts erstreckende Arretierung umfasst.

7. Anordnung nach Anspruch 2, wobei der Rückhalteabschnitt (166) des Eingangselements (130) eine Innennut (164) umfasst.

8. Anordnung nach Anspruch 7, wobei die Nut (164) zulässt, dass das Ringelement (147) sich axial in Bezug auf die hohle axiale Erweiterung (135) erstreckt.

9. Anordnung nach Anspruch 1, wobei die hohle axiale Erweiterung (135) ein offenes axiales Ende (139) umfasst.

10. Anordnung nach Anspruch 9, wobei das offene axiale Ende (139) eine Vielzahl von darin gebildeten axialen Schlitzen (176) umfasst, wobei die Schlitze zulassen, dass Abschnitte des offenen axialen Endes (139), die **dadurch** definiert sind, auseinander gespreizt werden.

11. Anordnung nach Anspruch 10, umfassend vier Schlitze (176), die in dem offenen axialen Ende (139) gebildet sind.

12. Anordnung nach Anspruch 10, wobei das offene axiale Ende (139) eine schräge Fläche (168) umfasst, um das Einsetzen der Eingangserweiterung (144) zu führen.

13. Anordnung nach Anspruch 1, die ferner umfasst:
einen Flansch (136), der an dem Eingangselement (130) gebildet ist, wobei der Flansch einen Schulterabschnitt (137) umfasst;
einen Federsitzabschnitt (150), der an dem Ausgangselement (140) angeordnet ist, und
eine zweite Feder (154), die zwischen dem Flansch (136) und dem Federsitz (150) angeordnet ist, um das Eingangselement (130) und das Ausgangselement (140) voneinander weg vorzuspannen.

14. Anordnung nach Anspruch 13, wobei die zweite Feder (154) mit einem vorbestimmten Belastungswiderstand versehen ist, über dem die Luftventilanordnung (120) zusammenklappt, indem zugelassen wird, dass das Eingangselement (130) und das Ausgangselement (140) sich axial zueinander bewegen.

15. Verfahren zum Zusammenbauen eines Luftventils (120) für einen Unterdruck-Bremskraftverstärker, wobei das Luftventil ein Eingangselement (130) und ein Ausgangselement (140) umfasst, mit den Schritten:
Zurückhalten eines Halters (147) an einer Eingangserweiterung (144) des Ausgangselements (140);
Spreizen einer axialen Erweiterung (135) des Eingangselements (130) über den Halter (147);
Einsetzen der Eingangserweiterung (144) des Ausgangselements (140) in die axiale Erweiterung (135) des Eingangselements (130); und
Zurückhalten der Eingangserweiterung (144) an der axialen Erweiterung (135).

16. Verfahren nach Anspruch 15, ferner umfassend den Schritt:
Bereitstellen einer Feder (154) zwischen dem Eingangselement (130) und dem Ausgangselement (140), bevor die Eingangserweiterung (144) in die axiale Erweiterung (135) eingesetzt wird.

## Revendications

1. Ensemble formant clapet pneumatique (120) pour un vérin de puissance (114) dans un servofrein à dépression, comprenant :
un élément d'entrée (130) comportant une extension axiale creuse (135), l'extension axiale creuse comportant une partie de retenue (166) ;
un élément de sortie (140) comportant une extension d'entrée (144) positionnée de manière à pouvoir coulisser à l'intérieur de l'extension axiale creuse (135), l'extension d'entrée comportant une rainure externe (146) formée à l'intérieur ;
un ressort (170) disposé entre l'élément d'entrée (130) et le vérin de puissance (114) et couplé au vérin de puissance ; et
un élément annulaire (147) disposé dans la rainure externe (146), l'élément annulaire étant positionné de manière adjacente à la partie de retenue (166) afin d'empêcher la séparation de l'élément d'entrée (130) et de l'élément de sortie (140).

2. Ensemble selon la revendication 1, dans lequel l'élément annulaire (147) s'étend vers l'extérieur à partir de la rainure externe (146) afin de s'assembler avec la partie de retenue (166).

3. Ensemble selon la revendication 1, dans lequel l'élément annulaire (147) est un jonc d'arrêt.

4. Ensemble selon la revendication 2, dans lequel la partie de retenue (166) de l'élément d'entrée (130) comporte une encoche s'étendant vers l'intérieur positionnée de manière adjacente à une extrémité axiale ouverte (139) de l'extension axiale creuse (135).

5. Ensemble selon la revendication 2, dans lequel la partie de retenue (166) de l'élément d'entrée (130) comporte une surface de rétention radiale s'étendant vers l'intérieur.

6. Ensemble selon la revendication 2, dans lequel la partie de retenue (166) de l'élément d'entrée (130) comporte un élément de saisie s'étendant vers l'intérieur.

7. Ensemble selon la revendication 2, dans lequel la partie de retenue (166) de l'élément d'entrée (130) comporte une rainure interne (164).

8. Ensemble selon la revendication 7, dans lequel la rainure (164) permet le déplacement axial de l'élément annulaire (147) par rapport à l'extension axiale creuse (135).

9. Ensemble selon la revendication 1, dans lequel l'extension axiale creuse (135) comporte une extrémité axiale ouverte (139).

10. Ensemble selon la revendication 9, dans lequel l'extrémité axiale ouverte (139) comporte une pluralité de fentes axiales (176) formées à l'intérieur, les fentes permettant la répartition de parties de l'extrémité axiale ouvertes (139) ainsi définies.

11. Ensemble selon la revendication 10, comportant quatre fentes (176) formées sur l'extrémité axiale ouverte (139).

12. Ensemble selon la revendication 10, dans lequel l'extrémité axiale ouverte (139) comporte une surface chanfreinée (168) destinée à guider l'insertion de l'extension d'entrée (144).

13. Ensemble selon la revendication 1, comprenant, en outre :
une bride (136) formée sur l'élément d'entrée (130), la bride comportant une partie en épaulement (137) ;
une partie formant siège de ressort (150) formée sur l'élément de sortie (140) ; et
un second ressort (154) disposé entre la bride (136) et le siège de ressort (150) afin d'appliquer l'élément d'entrée (130) et l'élément de sortie (140) à l'opposé l'un de l'autre.

14. Ensemble selon la revendication 13, dans lequel le second ressort (154) est agencé avec une résistance de charge prédéterminée au-dessus de laquelle l'ensemble formant clapet pneumatique (120) s'affaisse, autorisant l'élément d'entrée (130) et l'élément de sortie (140) à se déplacer axialement l'un vers l'autre.

15. Procédé d'assemblage d'un clapet pneumatique (120) pour servofrein à dépression, le clapet pneumatique comportant un élément d'entrée (130) et un élément de sortie (140) comprenant :
le maintien d'un jonc d'arrêt (147) sur une extension d'entrée (144) de l'élément de sortie (140) ;
la répartition d'une extension axiale (135) de l'élément d'entrée (130) sur le jonc d'arrêt (147) ;
l'insertion de l'extension d'entrée (144) de l'élément de sortie (140) sur l'extension axiale (135) de l'élément d'entrée (130) ; et
le maintien de l'extension d'entrée (144) sur l'extension axiale (135).

16. Procédé selon la revendication 15, comprenant, en outre :
l'agencement d'un ressort (154) entre l'élément d'entrée (130) et l'élément de sortie (140) avant que l'extension d'entrée (144) soit insérée sur l'extension axiale (135).
